# EUROPÄISCHE PATENTANMELDUNG

(11) **EP 2 755 048 A1**
(43) Veröffentlichungstag der Anmeldung: **16.07.2014**
(21) Anmeldenummer: 13192546.3
(22) Anmeldetag: 12.11.2013
(51) Int. Cl.: G01S 17/10, G01S 7/487

(54) **Entfernungsmessender optoelektronischer Sensor und Verfahren zur Abstandsbestimmung von Objekten**

(30) Priorität: 15.01.2013 DE 102013100367
(71) Anmelder: SICK AG, 79183 Waldkirch (DE)
(72) Erfinder: Schmitz, Stephan, Dr., 79108 Freiburg (DE); Kufner, Martin, 79215 Elzach (DE); Huber, Gregor, 79110 Freiburg (DE); Szerbakowski, Boris, 79183 Waldkirch (DE)
(74) Vertreter: Hehl, Ulrich

(57) **Zusammenfassung**

Es wird ein entfernungsmessender optoelektronischer Sensor (10) zur Abstandsbestimmung von Objekten in einem Überwachungsbereich (20) mit einem Lichtsender (12) zum Aussenden eines Sendelichtstrahls (16), einem Lichtempfänger (26) zum Erzeugen eines Empfangssignals aus von Objekten in dem Überwachungsbereich (20) remittiertem oder reflektiertem Sendelicht (22), einem A/D-Wandler (34) zum Abtasten des Empfangssignals und einer Auswertungseinheit (32) angegeben, wobei der Sendelichtstrahl (16) eine Vielzahl aufeinanderfolgender Sendepulse aufweist und die Auswertungseinheit (32) dafür ausgebildet ist, eine Vielzahl von Empfangspulsen in dem abgetasteten Empfangssignal, die aus den Sendepulsen entstehen, in einem Summensignal aufzuaddieren, aus dem Summensignal einen Empfangszeitpunkt und somit mittels eines Lichtlaufzeitverfahrens den Objektabstand zu bestimmen. Dabei weist die Auswertungseinheit (32) ein digitales Filter auf, um das Summensignal zur Bestimmung eines Empfangszeitpunkts zu filtern, wobei das Filter ein an die Empfangspulse angepasstes Optimalfilter ist.

## Beschreibung

Die Erfindung betrifft einen entfernungsmessenden optoelektronischen Sensor und ein Verfahren zur Abstandsbestimmung von Objekten in einem Überwachungsbereich nach dem Oberbegriff von Anspruch 1 beziehungsweise 9.

Optoelektronische entfernungsmessende Sensoren sind als einstrahlige Taster bekannt, mit denen die Entfernung zu einem anvisierten Ziel oder Entfernungen zu Objekten längs einer Überwachungsstrecke mit Hilfe eines Lichtlaufzeitverfahrens gemessen werden. Um Objektentfernungen in einem größeren Winkelbereich zu erfassen oder eine Objektkontur zu vermessen, werden Laserscanner eingesetzt. Dabei überstreicht ein von einer starken Lichtquelle, in der Regel einem Laser, erzeugter Lichtstrahl mit Hilfe einer Ablenkeinheit periodisch den Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Überwachungsbereich oder dessen Kontur in zweidimensionalen Polarkoordinaten erfasst.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Zur Abstandsbestimmung wird die Lichtlaufzeit zwischen Aussenden und Empfangen eines Lichtsignals gemessen, das von einer Oberfläche in dem Überwachungsbereich remittiert oder reflektiert wird. Herkömmlich unterscheidet man zwei Verfahren, nämlich Pulslaufzeitverfahren und Phasenverfahren. In Pulslaufzeitverfahren werden einzelne kurze Lichtpulse ausgesandt und deren Laufzeit anhand eines Charakteristikums des Pulses, beispielsweise dessen Maximum bestimmt. Bei einem Phasenverfahren wird das Licht amplitudenmoduliert und die Phasenverschiebung des ausgesandten gegenüber dem empfangenen Licht ausgewertet. Phasenverfahren haben zunächst einen durch die verwandte Modulationsfrequenz des Lichts begrenzten Eindeutigkeitsbereich, der aber durch zusätzliche Maßnahmen erweitert werden kann.

Unter einem Pulsverfahren wird üblicherweise ein Einzelpulsverfahren verstanden. Die Auswertung des rückgestreuten Signals eines Einzelpulses ist sehr effizient und bietet das höchste Signal-Rausch-Verhältnis. Allerdings bedarf dieses Vorgehen entsprechend leistungsfähiger, aufwändiger Laserlichtquellen und kann auch durch Bestimmungen zur Gewährleistung der Augensicherheit begrenzt werden. Deshalb besteht trotz der in gewisser Hinsicht technisch überlegenen Leistung eines Einzelpulsverfahrens ein Bedarf an Alternativen, die vor allem kostengünstiger sind.

Ein Ansatz hierzu, der beispielsweise in der EP 2 315 045 B1 verfolgt wird, besteht in der wiederholten Aussendung von im Vergleich mit einem Einzelpulsverfahren schwächeren Lichtpulsen, deren rückgestreute Empfangspulse aufsummiert werden. Da Rauschereignisse zufällig, Empfangspulse jedoch systematisch zu dem Summensignal beitragen, bildet sich in dem Summensignal ein mit der Anzahl der Wiederholungen anwachsendes Nutzsignal heraus, während sich die Störungen ausmitteln. Obwohl also das Signal-Rausch-Verhältnis bezogen auf den einzelnen Puls gegenüber einem Einzelpulsverfahren verschlechtert ist, kann in einem Pulsmittelungsverfahren über die Anzahl Wiederholungen ein ebenso gutes und auch besseres effektives Signal-Rausch-Verhältnis erreicht werden.

Die EP 2 315 045 B1 setzt ein schmalbandiges Bandpassfilter ein, um den zunächst unipolaren Empfangspuls in ein bipolares Signal umzuwandeln. Dadurch wird ermöglicht, den Empfangszeitpunkt anhand des Nulldurchgangs des bipolaren Signals sehr präzise zu bestimmen. Anders ausgedrückt wird durch das schmalbandige Bandpassfilter der sogenannte "walk error" minimiert. Darunter versteht man den Fehler in der Bestimmung des Empfangszeitpunkts, der durch intensitäts- und damit auch reichweitenabhängige Verformungen des Empfangspulses entsteht. Der "walk error" kann zwar auch durch intensitätsabhängige Korrekturtabellen zumindest zum Teil kompensiert werden. Ohne schmalbandiges Bandpassfilter enthält diese Korrekturtabelle aber durchaus Korrekturwerte im Bereich von Dezimetern, was bei einer in EP 2 315 045 B1 angestrebten Präzision der Abstandsmessung mindestens im Zentimeterbereich, wenn nicht darunter, nicht mehr zu vernünftigen Ergebnissen führen würde. Die Minimierung des "walk errors" durch eine schmalbandige Begrenzung wird aber mit einer Verringerung des nutzbaren Signals erkauft. Letztlich wertet die EP 2 315 045 B1 nämlich nur den ersten Teil der Filterantwort des Bandpasses aus. Konkret wird dazu der erste Nulldurchgang mittels linearer Regression aufgefunden.

Die meisten Sensoren mit Lichtlaufzeitverfahren messen lediglich einen Objektabstand und werten dazu das Empfangssignal mit Schwellenoperationen aus. Einige Geräte, wie beispielsweise ein Laserscanner nach EP 2 182 378 A1, gehen darüber hinaus und speichern das abgetastete Empfangssignal. Anschließend werden in einer digitalen Signalverarbeitung Peaks in dem Empfangsignal gesucht und daraus die Abstände von hintereinander in dem Abtaststrahl angeordneten Objekten ermittelt. So wird beispielsweise sowohl der Abstand einer Glasscheibe als auch der Abstand eines dahinter angeordneten Objekts erkannt. Diese Eigenschaft des Sensors wird auch als Mehrechofähigkeit bezeichnet. Bei einem Pulsmittelungsverfahren mit schmalbandigem Bandpassfilter, wie in der EP 2 315 034 B1 beschrieben, sind aber die Nachschwingungen der Filterantwort ununterscheidbar von weiteren Messereignissen. Daher sind solche Systeme nicht mehrechofähig.

Es ist vor diesem Hintergrund Aufgabe der Erfindung, die Entfernungsmessung mit einem Pulsmittelungsverfahren zu verbessern.

Diese Aufgabe wird durch einen entfernungsmessenden optoelektronischen Sensor und ein Verfahren zur Abstandsbestimmung von Objekten in einem Überwachungsbereich nach Anspruch 1 beziehungsweise 9 gelöst. Dabei geht die Erfindung von einem Pulsmittelungsverfahren aus, bei dem eine Vielzahl von Einzelpulsen wiederholt ausgesandt wird. Die jeweils auf einen Einzelpuls folgenden Signalabschnitte des Empfangssignals werden aufaddiert. Dabei bildet der jeweilige Sendezeitpunkt den zeitlichen Bezug zum Auffinden der betreffenden Signalabschnitte, so dass das Aufaddieren kohärent erfolgen kann, also unter konstruktiver Überlagerung der jeweiligen Empfangspulse. Der Grundgedanke der Erfindung besteht nun darin, das Summensignal mit einem an die Empfangspulse angepassten Filter (Optimalfilter, matched filter, Korrelationsfilter) auszuwerten. Als Filterantwort ergibt sich dann nämlich ein schmaler Puls, dessen Lage gerade der gesuchten Lichtlaufzeit entspricht.

Die Erfindung hat den Vorteil, dass die Reichweite der Entfernungsmessung gegenüber dem herkömmlichen Auffinden des Nulldurchgangs in der Filterantwort eines analogen Filters erheblich erhöht wird. Es geht keine oder zumindest deutlich weniger Energie in nicht ausgewerteten Signalabschnitten verloren, beispielsweise Nachschwingungen.

Das Filter ist bevorzugt an die Form und Länge der Empfangspulse angepasst. Der ideale Verlauf des Empfangspulses, also ohne Störeinflüsse, entspricht dem durch Bauteile in dem Empfangspfad beeinflussten Sendepuls und ist damit prinzipiell bekannt. Alternativ kann der typische Verlauf des auszuwertenden Signals durch Messung mit einer großen Zahl von Wiederholungen bestimmt werden. Da es hier um die Filteranpassung und keine zeitkritische Messung geht, können praktisch beliebig viele Wiederholungen verwendet werden. Ein Beispiel für ein an Form und Länge angepasstes Filter ist eine Skalierung des idealisierten Empfangspulses. Es kann aber auch genügen, typische Charakteristika des Verlaufs des idealisierten Empfangspulses nachzubilden, also Maximum, Flanken, Nulldurchgänge und dergleichen. Dies sind Beispiele für ein Korrelationsfilter. Andere bekannte Methoden zur Anpassung eines Optimalfilters sind ebenso denkbar.

Zwischen Lichtempfänger und A/D-Wandler ist bevorzugt ein Bandpassfilter mit einer unteren Grenzfrequenz von 5-10 MHz und einer oberen Grenzfrequenz von 200-250MHz geschaltet. Die untere Grenze soll im Wesentlichen nur hoch genug liegen, um Gleichlichtanteile auszufiltern. Durch die obere Grenze wird das Band breit genug, um keine Schwingung wie im Stand der Technik entstehen zu lassen. Der Empfangspuls enthält lediglich einen nachfolgenden Unterschwinger, der bei der Anpassung des Optimalfilters berücksichtigt wird. Das in dieser Ausführungsform genutzte Bandpassfilter wird also gerade nicht schmalbandig gewählt, um den "walk error" zu minimieren, sondern breitbandig genug, damit möglichst die gesamte Energie des Empfangspulses durch den Optimalfilter ausgewertet werden kann. Dadurch kann die Reichweite der Entfernungsmessung deutlich erhöht werden.

Der A/D-Wandler ist bevorzugt ein Binarisierer. Alternativ wird das Empfangssignal nur mit wenigen Bit abgetastet. Das ermöglicht den Einsatz von sehr kostengünstigen Bauteilen. Obwohl der einzelne Empfangspuls auf diese Weise nur mit einem Bit oder wenigen Bit aufgelöst wird, ergibt sich durch die Wiederholungen in dem Summensignal eine praktisch beliebige gewünschte Auflösung.

Die Sendepulse weisen bevorzugt gegenüber einer gleichmäßigen Wiederholrate unterschiedliche Verzögerungen auf. Das kohärente Aufaddieren erfolgt dann dennoch auf Basis einer gleichmäßigen Wiederholrate. Die einzelnen Wiederholungen haben damit einen gewissen Jitter beziehungsweise werden auf der Zeitachse gewissermaßen verschmiert. Das führt dazu, dass aus einem dreiecksförmigen Puls in der Antwort des Optimalfilters ein gaußförmiges Maximum wird, dessen Lage wesentlich robuster und genauer bestimmt werden kann.

Die Auswertungseinheit ist bevorzugt dafür ausgebildet, den Empfangszeitpunkt anhand einer Einpassung einer symmetrischen Vergleichsfunktion in ein Maximum des gefilterten Summensignals aufzufinden, insbesondere mittels Parabelfit. Dies ist eine besonders zuverlässige Möglichkeit, die Lichtlaufzeit sehr genau zu messen.

Die Auswertungseinheit ist bevorzugt dafür ausgebildet, mehrere Korrelationsmaxima der Korrelationsfolge zu identifizieren und daraus die Abstände mehrerer Objekte längs des Sendelichtstrahls zu bestimmen. Dadurch wird der Sensor mehrechofähig. Das wird durch die erfindungsgemäße Auswertung mit einem Optimalfilter und ohne schmalbandiges Bandpassfilter ermöglicht, denn es gibt keine Nachschwingungen in dem Summensignal, welche zu Verwechslungen mit Maxima von zusätzlichen Zielen führen würden.

Der Sensor ist bevorzugt als Laserscanner mit einer Ablenkeinheit zur periodischen Ablenkung des Sendelichtstrahls in den Überwachungsbereich ausgebildet, um eine Überwachungsebene oder einen Überwachungsraum abzutasten. Dadurch wird die Messung nicht nur entlang eines Strahls, sondern in zwei- oder dreidimensionalen Bereichen ermöglicht.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung durch einen Laserscanner;
- Fig. 2a: ein beispielhaftes Summensignal von aufaddierten Empfangspulsen in einem Sensor nach dem Stand der Technik; und
- Fig. 2b: ein beispielhaftes Summensignal von aufaddierten Empfangspulsen in einem erfindungsgemäßen Sensor.

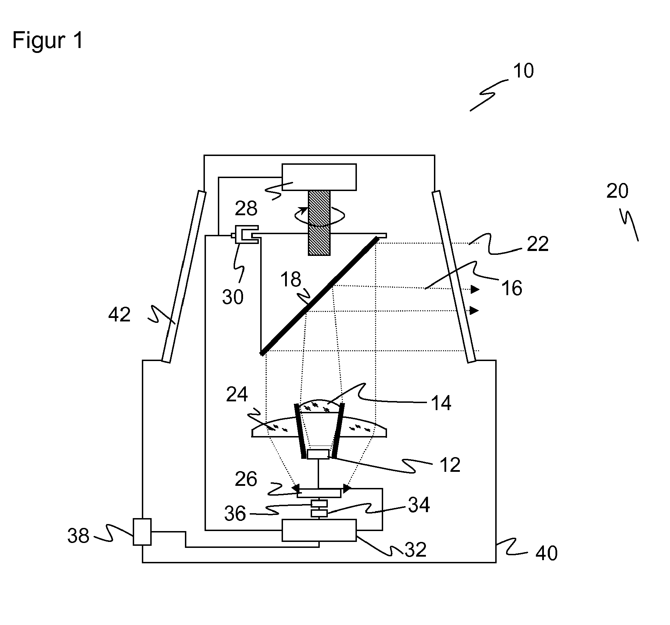

Fig. 1 zeigt eine schematische Schnittdarstellung durch einen optoelektronischen Sensor in einer Ausführungsform als Laserscanner 10. Eine alternative Ausführungsform als einstrahliger Taster ist ebenfalls möglich, wird aber nicht dargestellt und beschrieben, da die Entfernungsmessung hier in vergleichbarer Weise funktioniert.

Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt und dort von einem gegebenenfalls vorhandenen Objekt remittiert. Das remittierte Licht 22 gelangt wieder zu dem Laserscanner 10 zurück und wird dort über die Ablenkeinheit 18 mittels einer Empfangsoptik 24 von einem Lichtempfänger 26 detektiert, beispielsweise einer Photodiode oder für höhere Empfindlichkeit einer Lawinenphotodiode (APD). Bei dem dargestellten Laserscanner 10 befindet sich der Lichtsender 12 und dessen Sendeoptik 14 in einer zentralen Öffnung der Empfangsoptik 24. Dies ist nur eine beispielhafte Möglichkeit der Anordnung. Die Erfindung umfasst daneben alternative Lösungen, etwa mit einem eigenen Spiegelbereich für den Sendelichtstrahl 16 oder mit Teilerspiegeln.

Die Ablenkeinheit 18 wird von einem Motor 28 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

Eine Auswertungseinheit 32, die zugleich Steuerungsfunktionen des Laserscanners 10 übernimmt, ist mit dem Lichtsender 12, dem Lichtempfänger 26, dem Motor 28 und der Winkelmesseinheit 30 verbunden. Die Auswertungseinheit 32 veranlasst den Lichtsender 12, als Sendelichtstrahl 16 wiederholt einzelne Sendelichtpulse mit einer typischen Pulsbreite von einigen Nanosekunden auszusenden. Auf dem Empfangspfad ist ein A/D-Wandler 34 angeordnet, insbesondere ein einfacher Komparator oder Binarisierer, um das Signal des Lichtempfängers 26 zu digitalisieren. Dem A/D-Wandler 34 ist ein relativ breitbandiges Bandpassfilter 36 mit einer unteren Grenzfrequenz von einigen MHz zur Unterdrückung von Gleichlicht und einer oberen Grenzfrequenz im Bereich von 200-350 MHz vorgeordnet. In dem digitalisierten Empfangssignal entsteht mit jedem aus dem Überwachungsbereich 20 remittierten Sendelichtpuls ein Empfangspuls, der wegen des Bandpassfilters 36 ein Maximum und einen nachfolgenden Unterschwinger aufweist. Diese Empfangspulse werden in der Auswertungseinheit 32 über eine Vielzahl von Sendelichtpulsen kohärent zu einem Summensignal aufaddiert.

In dem Summensignal bildet sich mit den Wiederholungen zunehmend die ideale, unverrauschte Form des Empfangspulses heraus, weil sich die Empfangspulse der einzelnen Wiederholungen konstruktiv überlagern und Störeffekte sich ausmitteln. Um die gesuchte Lichtlaufzeit zu bestimmen, aus welcher der Objektabstand über die konstante Lichtgeschwindigkeit unmittelbar abgeleitet werden kann, wertet die Auswertungseinheit 32 das Summensignal mit einem an die erwartete Form des Empfangspulses angepassten Optimalfilter (matched filter) aus. In der Filterantwort zeigt sich ein bei guter Filteranpassung scharf bestimmbares Maximum bei der gesuchten Lichtlaufzeit.

Das digitale Filter zur Auswertung generiert also nicht wie der schmalbandige Bandpass im Stand der Technik eine Schwingung, deren erster Nulldurchgang mit geringem "walk error" durch lineare Regression ermittelt wird. Stattdessen werden im analogen Empfangspfad zur Erhöhung der Reichweite möglichst keine Signalanteile unterdrückt, sondern es wird ein digitales, angepasstes Filter benutzt, welches die ausgesandte Pulsform berücksichtigt. Dieses digitale Filter ist der Signalform nach dem Durchgang durch den Lichtempfänger 26 und das breitbandige Bandpassfilter 36 angepasst. Denn die Elemente im Empfangspfad sorgen zumindest für eine leichte Verschleifung des Sendepulses, im Falle des Bandpassfilters 36 auch zu einer gezielten Veränderung des Empfangspulses, so dass die Anpassung des Filters lediglich an die ursprüngliche Sendepulsform regelmäßig nicht genügt.

Verwendet man einen kurzen Rechteckimpuls als Sendepuls, so wäre in einer idealisierten Betrachtung der Empfangspuls, damit auch das Summensignal ebenfalls ein Rechteck. Nach Faltung mit einem angepassten Filterkern des digitalen Optimalfilters ergibt sich wiederum ein Rechteck, das umso schmaler wird, je besser das Filter angepasst ist. Dessen Lage jedoch lässt sich nur mit einer Genauigkeit in der Größenordnung der Abtastrate des A/D-Wandlers 34 bestimmen. Deshalb ist in einer bevorzugten Ausführungsform vorgesehen, die Sendezeitpunkt der einzelnen Pulse mit leichten individuellen Verzögerungen zu versehen. Sendezeitpunkte lassen sich nämlich unabhängig von der Abtastrate des A/D-Wandlers 34 und mit viel höherer zeitlicher Präzision vorgeben. Anstelle eines Rechtecks ergibt sich wegen der individuellen Verzögerungen in der Filterantwort eine Verteilung, die meist schon bei wenigen Wiederholungen einer Gaußfunktion sehr ähnlich wird. Die Lage einer Gaußfunktion ermöglicht eine sehr präzise interpolierende Auswertung durch Funktionsfit, beispielsweise einer einfachen Funktion wie einer Parabel.

Aus der derart bestimmten Lichtlaufzeit ist der Abstand des angetasteten Objekts bekannt. Da das Bandpassfilter 36 den "walk error" nicht mehr minimiert, sollte im Anschluss noch eine Entfernungskorrektur beispielsweise mit Hilfe einer Korrekturtabelle in Abhängigkeit von der Signalstärke und möglicherweise auch der Signalbreite erfolgen. Die jeweilige Winkelstellung, unter welcher dabei der Sendelichtstrahl 16 ausgesandt wurde, übermittelt die Winkelmesseinheit 30 der Auswertungseinheit 32. Somit stehen nach jeder Scanperiode über den Winkel und die Entfernung zweidimensionale Polarkoordinaten aller Objektpunkte in dem Überwachungsbereich 20 zur Verfügung. Damit sind die Objektpositionen beziehungsweise Objektkonturen bekannt und können über eine Schnittstelle 38 ausgegeben werden. Die Schnittstelle 38 dient umgekehrt auch als Parametrierschnittstelle, über welche der Auswertungseinheit 32 Daten eingespielt werden können. Alternativ kann eine eigene Parametrierschnittstelle vorgesehen sein. Ist der Sensor 10 als Sicherheitsscanner im Sinne der einleitend genannten Normen ausgebildet, wird auch die Schnittstelle 38 sicher ausgebildet, insbesondere als sicherer Ausgang (OSSD, Output Signal Switching Device) für ein sicherheitsgerichtetes Abschaltsignal bei Erkennen einer Schutzfeldverletzung.

Der Laserscanner 10 ist in einem Gehäuse 40 untergebracht, welches eine umlaufende Frontscheibe 42 aufweist. Die Geometrie des Gehäuses 40 und der Frontscheibe 42 sind ebenso wie die Gestaltung von Sende- und Empfangskanal rein beispielhaft zu verstehen. Es sind zahlreiche alternative Konzepte bekannt, bei denen die Erfindung ebenfalls einsetzbar ist.

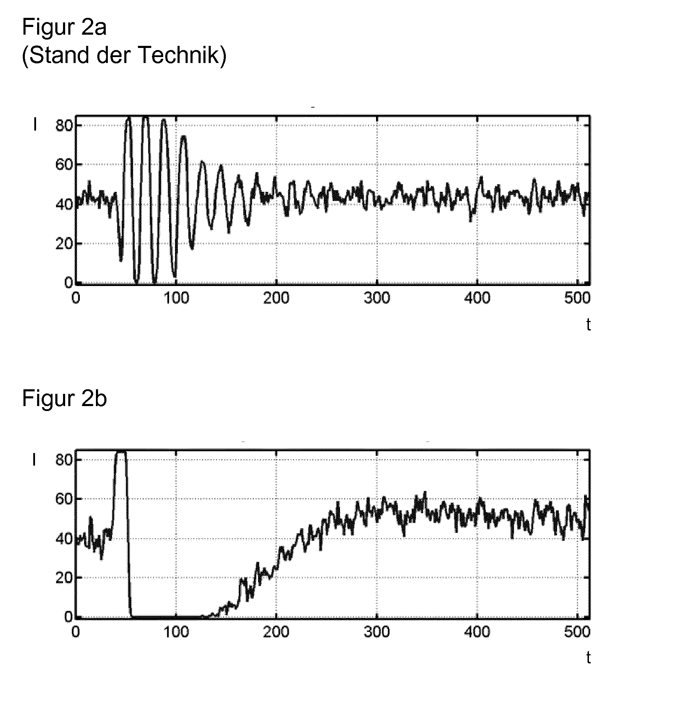

Figur 2 veranschaulicht das Summensignal eines erfindungsgemäßen Sensors 10. Dabei zeigt Figur 2a zum Vergleich einen beispielhaften Signalverlauf in einem System nach dem Stand der Technik mit schmalbandigem Bandpassfilter und Figur 2b einen beispielhaften Signalverlauf in einem erfindungsgemäßen Sensor 10.

Im Summensignal gemäß Stand der Technik der Figur 2a stößt der empfangene Puls eine Schwingung an, deren erster Nulldurchgang mit geringem "walk error" gemessen werden kann. Bei diesem Verfahren wird aber die Energie der weiteren Schwingungen für die Messung nicht ausgenutzt. Zudem ist sofort ersichtlich, dass ein solches System nicht mehrechofähig ist, weil weitere Empfangspulse nicht von Nachschwingungen unterschieden werden könnten.

Dagegen bleibt es bei dem Summensignal des erfindungsgemäßen Sensors 10 der Figur 2b bei einem einzigen Unterschwingen. Die gesamte Energie des Empfangssignals kann durch einen an die erwartete Form des Empfangssignals optimal angepassten Filter für eine Messung mit erheblich höherer Reichweite genutzt werden. Figur 2b illustriert zugleich, dass die erwartete Form und Länge des Empfangssignals vorab bekannt ist oder beispielsweise durch eine Messung bestimmt werden kann, wie sie auch der Figur 2b zugrunde liegt. Dadurch wird eine sehr gute Filteranpassung ermöglicht.

## Patentansprüche

1. Entfernungsmessender optoelektronischer Sensor (10) zur Abstandsbestimmung von Objekten in einem Überwachungsbereich (20) mit einem Lichtsender (12) zum Aussenden eines Sendelichtstrahls (16), einem Lichtempfänger (26) zum Erzeugen eines Empfangssignals aus von Objekten in dem Überwachungsbereich (20) remittiertem oder reflektiertem Sendelicht (22), einem A/D-Wandler (34) zum Abtasten des Empfangssignals und einer Auswertungseinheit (32), wobei der Sendelichtstrahl (16) eine Vielzahl aufeinanderfolgender Sendepulse aufweist und die Auswertungseinheit (32) dafür ausgebildet ist, eine Vielzahl von Empfangspulsen in dem abgetasteten Empfangssignal, die aus den Sendepulsen entstehen, in einem Summensignal aufzuaddieren, aus dem Summensignal einen Empfangszeitpunkt und somit mittels eines Lichtlaufzeitverfahrens den Objektabstand zu bestimmen,
**dadurch gekennzeichnet,**
**dass** die Auswertungseinheit (32) ein digitales Filter aufweist, um das Summensignal zur Bestimmung eines Empfangszeitpunkts zu filtern, wobei das Filter ein an die Empfangspulse angepasstes Optimalfilter ist.

2. Sensor (10) nach Anspruch 1,
wobei das Filter an die Form und Länge der Empfangspulse angepasst ist.

3. Sensor (10) nach Anspruch 1 oder 2,
wobei zwischen Lichtempfänger (26) und A/D-Wandler (34) ein Bandpassfilter (36) mit einer unteren Grenzfrequenz von 5-10 MHz und einer oberen Grenzfrequenz von 200-250MHz geschaltet ist.

4. Sensor (10) nach einem der vorhergehenden Ansprüche,
wobei der A/D-Wandler (34) ein Binarisierer ist.

5. Sensor (10) nach einem der vorhergehenden Ansprüche,
wobei die Sendepulse gegenüber einer gleichmäßigen Wiederholrate unterschiedliche Verzögerungen aufweisen.

6. Sensor (10) nach einem der vorhergehenden Ansprüche,
wobei die Auswertungseinheit (32) dafür ausgebildet ist, den Empfangszeitpunkt anhand einer Einpassung einer symmetrischen Vergleichsfunktion in ein Maximum des gefilterten Summensignals aufzufinden, insbesondere mittels Parabelfit.

7. Sensor (10) nach einem der vorhergehenden Ansprüche,
wobei die Auswertungseinheit (32) dafür ausgebildet ist, mehrere Korrelationsmaxima der Korrelationsfolge zu identifizieren und daraus die Abstände mehrerer Objekte längs des Sendelichtstrahls (16) zu bestimmen

8. Sensor (10) nach einem der vorhergehenden Ansprüche,
der als Laserscanner mit einer Ablenkeinheit (18) zur periodischen Ablenkung des Sendelichtstrahls (16) in den Überwachungsbereich (20) ausgebildet ist, um eine Überwachungsebene oder einen Überwachungsraum abzutasten.

9. Verfahren zur Abstandsbestimmung von Objekten in einem Überwachungsbereich (20), wobei ein Sendelichtstrahl (16) mit einer Vielzahl aufeinanderfolgender Sendepulse ausgesandt und aus von Objekten in dem Überwachungsbereich (20) remittiertem oder reflektiertem Sendelicht (22) ein Empfangssignal mit einer Vielzahl von Empfangspulsen erzeugt wird, die aus den Sendepulsen entstehen, wobei das Empfangssignal digitalisiert wird, die Empfangspulse in einem Summensignal aufaddiert werden und aus dem Summensignal ein Empfangszeitpunkt und somit mittels eines Lichtlaufzeitverfahrens der Objektabstand bestimmt wird,
**dadurch gekennzeichnet,**
**dass** das Summensignal zur Bestimmung eines Empfangszeitpunkts mit einem an die Empfangspulse angepassten Optimalfilter digital gefiltert wird.
